# FASCICULE DE BREVET EUROPEEN

(11) **EP 2 047 122 B1**
(45) Date de publication et mention de la délivrance du brevet: **26.01.2011**
(21) Numéro de dépôt: 07823361.6
(22) Date de dépôt: 27.07.2007
(51) Int. Cl.: F16B 5/12

(54) **CLIP DE FIXATION A DEUX POSITIONS DE MAINTIEN NOTAMMENT POUR BAGUETTES DE CARROSSERIE AUTOMOBILE**
BEFESTIGUNGSKLAMMER MIT ZWEI SICHERUNGSPOSITIONEN, INSBESONDERE FÜR VERKLEIDUNGSSTREIFEN EINES KRAFTFAHRZEUGRAHMENS
FASTENING CLIP WITH TWO SECURING POSITIONS PARTICULARLY FOR MOTOR VEHICLE BODYWORK TRIM STRIPS

(30) Priorité: 28.07.2006 FR 0606931
(43) Date de publication de la demande: 15.04.2009
(73) Titulaire: Rehau SA, 57340 Morhange (FR)
(72) Inventeur: HAUDRY, Philippe, F-57670 Lening (FR); MULLER, Denis, F-57450 Henriville (FR)
(74) Mandataire: Metz, Paul
(86) Numéro de dépôt international: PCT/FR2007/001304
(87) Numéro de publication internationale: WO 2008/012448

(56) Documents cités:
- FR-A1- 2 747 435

## Description

La présente invention concerne un clip de fixation à deux positions de maintien ou de retenue, destiné principalement aux baguettes, moulures, enjoliveurs de ceinture de caisse ou de bas de caisse pour véhicules routiers notamment du type automobile.

L'invention se rapporte également à une baguette de protection ou d'enjolivement ou à tout autre élément à rapporter sur la carrosserie d'un véhicule routier notamment du type automobile, comportant de tels clips de fixation à deux positions.

Les baguettes de protection ou d'enjolivement de ce type sont des pièces en matière plastique réalisées par moulage par injection, conçues pour être montées fixes sur la carrosserie d'un véhicule.

Dans la pratique actuelle, ces baguettes de protection ou d'enjolivement sont peintes après moulage, sur leur lieu de fabrication ou chez un sous-traitant au moyen d'une ligne spécifique de mise en peinture.

Les baguettes sont alors livrées finies sur le site d'assemblage où elles sont montées sur le support correspondant, généralement la carrosserie d'une voiture, préalablement traité et peint de manière indépendante.

Cette façon de faire est particulièrement onéreuse, car elle nécessite une opération de peinture indépendante de celle du support (« off line ») et une logistique importante pour la mettre en oeuvre et pour fournir dans le bon ordre, des baguettes de la bonne couleur, au niveau de la chaîne d'assemblage.

En outre, il arrive parfois que, malgré une opération préalable, longue et délicate, de mise au point et d'harmonisation des teintes, la baguette et son support, qui sont peints séparément et selon des techniques différentes, présentent des teintes légèrement différentes. De tels écarts peuvent par exemple provenir de faibles différences d'épaisseur des couches de peinture ou de l'emploi de gammes de peinture spécifiques pas exactement identiques.

Ce désaccord de teinte, minime lorsque les pièces sont regardées séparément, devient très visible lorsqu'elles sont montées l'une sur l'autre. Un tel défaut d'esthétique n'est actuellement plus acceptable par les constructeurs automobiles.

Le but de l'invention est de proposer une baguette de protection, d'enjolivement ou autre qui peut être montée sur la carrosserie avant que cette dernière ne subisse les différentes opérations de traitement et de peinture.

La baguette peut ainsi être traitée et peinte en même temps que la carrosserie sur laquelle elle est montée (« on line » ou « in line »). Un tel procédé est nettement plus économique, car il supprime la nécessité d'une ligne spécifique supplémentaire de mise en peinture pour les baguettes. De plus, il assure une parfaite harmonie des teintes entre la carrosserie et la baguette.

Dans le cas d'un traitement « on line », la baguette est montée sur la carrosserie avant le traitement anti-corrosion de la carrosserie par cataphorèse, alors que dans le cas d'un traitement « in line », la baguette est montée sur la carrosserie après ce traitement anti-corrosion mais avant les opérations de mise en peinture de finition (base métallisée ou laque, puis vernis) ; ces couches de finition étant préférentiellement appliquées par pulvérisation électrostatique de la peinture.

Cependant, pour que cette technique soit envisageable, la baguette ne doit pas gêner par sa présence les différentes opérations de traitement et de peinture de la carrosserie, notamment sur la partie de carrosserie se trouvant à proximité de la baguette ou masquée à l'arrière de celle-ci.

Pour cela, la baguette doit pouvoir être prémontée fixe sur la carrosserie à une certaine distance de celle-ci de manière que la baguette, ainsi que la totalité de la surface de la carrosserie puissent subir les opérations de traitement, notamment la cataphorèse, et puissent être revêtues de peinture, de laque et/ou de vernis.

En outre, cette baguette doit être capable de supporter sans détérioration les conditions parfois sévères de traitement de la carrosserie, la cataphorèse impliquant notamment un passage au four à une température de l'ordre de 200°C.

Elle doit ensuite pouvoir être placée facilement et rapidement en position finale d'utilisation, c'est-à-dire plaquée contre la carrosserie, avec un maintien suffisant pour résister aux conditions de roulage et aux efforts mécaniques divers auxquels elle peut être exposée par la suite, par exemple le frottement de rouleaux de lavage.

Par la demande FR 2.839.481 au nom d'ARIES, on connaît une baguette destinée à être montée sur la carrosserie d'un véhicule automobile qui répond à ce problème technique. Sur sa face interne, cette baguette comporte d'une part deux organes de prémontage coopérant avec des orifices spécifiques de la carrosserie qui permettent de maintenir la baguette dans une position écartée de son support. Elle comporte d'autre part une série de clips de blocage, coopérant avec un autre type d'orifices de la carrosserie, de manière à assurer la fixation de la baguette en position finale de verrouillage contre la carrosserie après avoir subi une poussée perpendiculaire au support.

Les deux organes de prémontage de cette réalisation antérieure sont formés chacun d'une pièce d'emboîtement préalablement mise en place sur l'orifice correspondant de la carrosserie, et d'une seconde pièce cylindrique rattachée à la baguette, susceptible de coulisser dans la pièce d'emboîtement et comportant en extrémité un ergot destiné à coopérer avec un creux de la pièce d'emboîtement.

Avant les opérations de peinture, on monte cette baguette sur la carrosserie en position écartée. Pour cela, l'opérateur insère la partie cylindrique de chacun des organes de prémontage dans la pièce d'emboîtement correspondante et exerce sur la baguette une poussée perpendiculaire à la carrosserie, dite « en Y » jusqu'à ce que l'ergot des parties cylindriques se bloque dans les creux correspondants des deux pièces d'emboîtement.

Une fois les opérations de peinture terminées, l'opérateur exerce une seconde poussée perpendiculaire à la carrosserie qui provoque la sortie des ergots de prémontage hors de leur logement et l'insertion des clips de blocage dans les orifices correspondants de la carrosserie, de manière à placer la baguette en position finale de verrouillage contre la carrosserie.

Une telle réalisation permet de répondre au problème technique. Cependant, en position écartée de prémontage, la baguette ARIES n'est soutenue sur toute sa longueur, qu'à deux endroits correspondant à l'emplacement des organes de prémontage. Ce maintien est assez limité et peut parfois s'avérer insuffisant par exemple lors du passage dans le bain de cataphorèse où la baguette peut se décrocher du fait des remous engendrés par le déplacement de la voiture dans le bain ou alors dans le four de cataphorèse où la baguette, insuffisamment maintenue, peut s'affaisser entre les deux points de fixation.

En outre, pour placer la baguette en position écartée de prémontage, puis pour la mettre en position plaquée de verrouillage, l'opérateur doit effectuer dans les deux cas un mouvement de même nature : une poussée « en Y » perpendiculaire au support.

L'opérateur doit donc, lors du prémontage, doser son effort de poussée pour que les parties cylindriques des organes de prémontage ne coulissent pas trop loin dans les pièces d'emboîtement et que les ergots des parties cylindriques ne dépassent pas leur position de réception dans les creux des pièces d'emboîtement.

Cette opération étant relativement délicate et menée à une cadence très rapide, il arrive que certaines baguettes se retrouvent trop près de la carrosserie. La présence de la baguette gêne alors les opérations ultérieures de traitement de la zone de carrosserie située derrière et empêche une pulvérisation correcte des différentes couches de peinture.

Le but de l'invention est de fournir une autre solution, plus avantageuse, pour résoudre ce problème technique.

Pour résoudre ce problème technique, l'invention fournit un clip de fixation destiné à assurer la fixation sur un support et plus particulièrement sur la carrosserie d'un véhicule routier notamment du type automobile, d'un élément linéaire décoratif et/ou fonctionnel, par exemple du type baguette, bande, moulure, enjoliveur de ceinture de caisse ou de bas de caisse.

Ce clip de fixation est moulé indépendamment de l'élément linéaire et destiné à être rapporté et assemblé sur la face intérieure de celui-ci.

Il comprend une base rapportée sur la face intérieure de l'élément linéaire, une partie d'accrochage comportant une structure saillante d'accrochage appelée tête de clip conçue pour coopérer avec une ouverture de montage du type en « trou de serrure » ménagée en regard dans le support, et une platine d'étanchéité destinée à obturer l'ouverture de montage en position finale d'utilisation.

Selon l'invention, la base comporte un moyen de retenue destiné à coopérer avec un moyen de retenue complémentaire porté par la platine d'étanchéité. Ces deux moyens de retenue permettent de réaliser deux positions de maintien du clip de fixation : une position de prémontage et une position finale d'utilisation, se traduisant respectivement par deux positions de montage de l'élément linéaire sur son support : une position écartée de prémontage à distance du support lorsque les deux moyens de retenue ne sont pas en prise et une position de verrouillage plaquée contre le support lorsque les deux moyens de retenue sont en prise l'un avec l'autre.

Selon une autre caractéristique essentielle de l'invention, la platine d'étanchéité se trouve à distance du support dans la position écartée de prémontage et fléchit pour se retrouver en contact avec celui-ci dans la position de verrouillage.

L'invention fournit également un élément linéaire décoratif ou fonctionnel, par exemple du type baguette, bande, moulure, enjoliveur de ceinture de caisse ou de bas de caisse, destiné à être rapporté contre et monté sur un support et plus particulièrement la carrosserie d'un véhicule routier notamment du type automobile, qui comporte sur sa face intérieure au moins un clip de fixation à deux positions de maintien selon l'invention.

Grâce à leurs deux positions de maintien, les clips de fixation selon l'invention, répartis sur toute la baguette, assurent à la fois le prémontage de la baguette en position écartée et le verrouillage final de celle-ci en position plaquée contre son support. Quelle que soit sa position de montage, la baguette selon l'invention est donc supportée par l'ensemble des clips de fixation, sur toute sa longueur.

Avantageusement, le prémontage de la baguette s'effectue au moyen d'un mouvement de coulissement longitudinal, c'est-à-dire au moyen d'un mouvement de translation dit « en X », alors que le montage final en position plaquée de verrouillage requiert une poussée transversale en « Y » perpendiculaire au support. Ces deux mouvements bien distincts évitent tout risque d'erreur de la part de l'opérateur.

En outre, le coulissement longitudinal de prémontage s'effectue à une distance fixe par rapport au support, déterminée par construction et optimale pour réaliser les opérations ultérieures de traitement et de peinture.

Grâce à la conception inventive et particulièrement avantageuse du clip selon l'invention, la platine d'étanchéité se trouve à distance du support dans la position écartée de prémontage et en contact avec celui-ci dans la position de verrouillage.

Elle peut ainsi parfaitement remplir sa fonction d'étanchéité en position finale de montage de l'élément linéaire. Mais en position écartée de prémontage, sa présence ne gêne en aucune façon les opérations de traitement et de peinture du support.

Les produits de traitement et/ou de peinture peuvent ainsi être appliqués sur sensiblement toute la superficie du support car la surface de contact entre le support et le clip de fixation selon l'invention est extrêmement réduite en position écartée de prémontage.

Le clip selon l'invention peut avantageusement être monté par clipsage sur deux nervures longitudinales s'étendant sur la face arrière de l'élément linéaire, ce qui autorise une translation du clip en cas de dilatation de l'élément linéaire différente de celle du support.

D'autres caractéristiques et avantages de l'invention apparaîtront à la lecture de la description détaillée qui va suivre, description faite en référence aux dessins annexés, dans lesquels :
- la figure 1 est une vue générale en perspective de la face intérieure d'un tronçon de baguette équipé de clips de fixation à deux positions de maintien selon l'invention ;
- la figure 2 est une vue latérale en perspective d'un clip de fixation selon l'invention, représenté seul et en position de prémontage ;
- la figure 3 est une vue de dessous en perspective d'un clip de fixation selon l'invention, représenté seul et en position de prémontage ;
- les figures 4 et 5 sont des vues de face en perspective d'un clip de fixation selon l'invention, représenté seul et respectivement en position de prémontage et en position finale d'utilisation ;
- les figures 6 et 7 sont des vues de dessus en perspective d'un clip de fixation selon l'invention, représenté seul et respectivement en position de prémontage et en position finale d'utilisation ;
- les figures 8 et 9 sont des vues en coupe longitudinale d'un clip de fixation selon l'invention, monté sur son support et respectivement en position de prémontage et en position finale d'utilisation ;
- les figures 10 et 11 sont des vues en coupe transversale d'un clip de fixation selon l'invention, représenté monté sur une la baguette mise en place sur son support, respectivement en position de prémontage correspondant à la position écartée de prémontage de la baguette et en position finale d'utilisation correspondant à la position plaquée de verrouillage de la baguette.

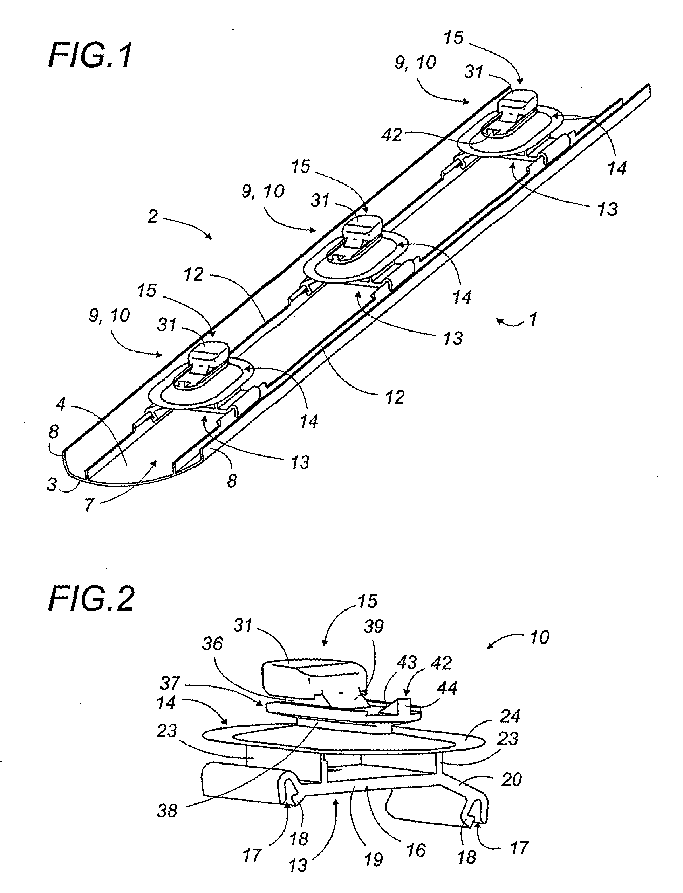

La baguette et le clip de fixation selon la présente invention vont maintenant être décrits de façon détaillée en référence aux figures 1 à 11. Les éléments équivalents représentés sur les différentes figures porteront les mêmes références numériques.

La présente invention se rapporte de façon générale à un élément linéaire à fixer sur un support et plus particulièrement sur la carrosserie d'un véhicule routier.

Par élément linéaire on entend plus particulièrement tout élément décoratif et/ou fonctionnel par exemple du type baguette, bande, moulure et autre que l'on fixe sur les portes, les ceintures de caisse, les bas de caisse ou autres parties de la carrosserie d'un véhicule routier. Pour des raisons de commodité on regroupera tous ces objets par le seul terme de baguette.

De la même façon, cet élément linéaire peut être rapporté et fixé sur tout support présentant les orifices appropriés. Cependant, l'application préférentielle visée concernant la carrosserie d'un véhicule, ce support sera désigné par la suite par le terme de carrosserie.

Sur les différentes figures, on a représenté des clips de fixation et une baguette constituant un mode de réalisation préférentiel de l'invention. Il doit cependant être bien compris que ces figures ainsi que la description détaillée de celles-ci ne sont données qu'à titre d'exemple et ne sont en rien limitatives de la portée de l'invention définie par les revendications. Ainsi par exemple, la tête de clip du clip selon l'invention pourrait présenter toute autre forme, différente de celle représentée, tant qu'elle reste appropriée pour coopérer avec l'ouverture correspondante de la carrosserie.

Par convention dans cette description, on désignera par faces avant et arrière du clip les faces de celui-ci dirigées respectivement vers la partie étroite et vers la partie large de l'ouverture en forme de trou de serrure, lorsque le clip est monté sur la carrosserie. Les notions de haut et de bas seront définies en fonction de l'orientation du clip tel que représenté sur les figures.

Sur la figure 1, un tronçon 1 d'une baguette 2 selon l'invention a été représenté.

Ce tronçon 1 de baguette 2 se présente sous la forme d'une pièce allongée qui comporte deux faces, une face extérieure 3 visible lorsque la baguette est montée, par exemple bombée convexe, et une face intérieure 4, par exemple concave, appliquée contre un support récepteur 5 par exemple la tôle d'une carrosserie 6.

Le corps de la baguette 2 définit ainsi du côté de sa face intérieure 4 un espace intérieur creux 7 longitudinal, continu et ouvert, destiné à être placé en direction du support 5, préférentiellement la carrosserie 6 d'un véhicule.

De manière classique, l'espace creux 7 est limité sur les côtés par deux rebords 8 longitudinaux, sensiblement verticaux ou obliques selon les exigences de style.

La baguette 2 comporte sur sa face intérieure 4 des moyens de fixation 9 de la baguette 2 sur le support 5. Selon l'invention, ces moyens de fixation 9 sont des clips de fixation à deux positions 10.

Pour assurer le montage et la fixation de la baguette 2 sur le support 5, ces clips de fixation 10 sont conçus pour coopérer avec une série d'ouvertures 11 prévues en regard dans le support 5, préférentiellement la tôle de la carrosserie 6 notamment au niveau des portes ou des bas de caisse.

De façon connue, la forme de ces ouvertures 11 est du type en « trou de serrure ». Elles présentent ainsi une zone large sensiblement rectangulaire, prolongée par une zone plus étroite.

Les clips de fixation 10 existent en plusieurs endroits, de préférence sur sensiblement toute la longueur du corps de la baguette 2, de manière à garantir un maintien uniforme et solide de la pièce moulée contre le support 5. Ils sont disposés selon un espacement prédéterminé correspondant à celui des ouvertures 11 avec lesquelles ils se retrouvent en vis-à-vis lorsque la baguette est positionnée contre son support 5.

Les clips de fixation 10 selon l'invention sont des clips moulés indépendamment de la baguette 2 et rapportés par la suite sur la face intérieure 4 de celle-ci.

Selon un mode de réalisation préférentiel de l'invention, la baguette comporte sur sa face intérieure 4 deux nervures longitudinales 12, sensiblement parallèles, qui se prolongent de préférence sensiblement sur toute la longueur de la baguette. Ces nervures longitudinales 12 sont préférentiellement minces afin d'éviter de provoquer des retassures sur l'autre face.

Selon le mode de réalisation préférentiel représenté, les clips de fixation 10 sont rapportés et assemblés par clipsage sur ces deux nervures 12. Ils peuvent ainsi se déplacer légèrement en translation afin de compenser les phénomènes de différence de dilatation entre la baguette et la carrosserie.

Selon d'autres variantes envisageables, les clips de fixation 10 ou certains d'entre eux peuvent être rapportés directement sur la face intérieure 4 de la baguette 2 ou sur des conformations quelconques de forme appropriée, différentes des nervures 12.

Sur la figure 1, on a représenté des clips de fixation 10 positionnés de manière équidistante le long des nervures 12. Néanmoins, suivant les modèles de baguette 2 et les possibilités d'ouvertures 11 dans le support 5, ces clips 10 peuvent être disposés différemment.

Le clip de fixation 10 selon l'invention comporte, respectivement de bas en haut, une base 13, une platine d'étanchéité 14 et une partie d'accrochage 15.

La base 13 est destinée à être rapportée sur la face intérieure 4 de la baguette 2. Elle comporte préférentiellement un plan de base 16, de préférence terminé de chaque côté par une rainure 17 ouverte vers le bas, prévue pour recevoir l'extrémité des nervures 12 de la baguette 2. Chaque rainure 17 présente pour cela une conformation d'accrochage 18 adaptée, susceptible de coopérer avec la nervure 12 correspondante afin d'assurer la fixation du clip 10 sur la baguette.

Le plan de base 16 peut être sensiblement horizontal ou incliné afin de s'adapter à la hauteur des nervures 12 qui ne sont pas forcément identiques, ou à un changement d'inclinaison de la carrosserie en regard de la baguette. Le plan de base 16 peut également présenter, comme sur l'exemple de réalisation représenté, une partie sensiblement horizontale 19 poursuivie par une partie inclinée 20.

La base 13 comporte un moyen de retenue 21, préférentiellement un évidement 22, situé de préférence au niveau du plan de base 16 et dont la fonction sera explicitée par la suite.

Sur le mode de réalisation préférentiel représenté, cet évidement 22 se présente sous la forme d'une ouverture traversante, par exemple sensiblement rectangulaire et ouverte sur son côté avant, formant ainsi une encoche ménagée dans le bord avant du plan de base 16.

La base 13 comporte également de préférence deux parois 23 sensiblement longitudinales, s'élevant du plan de base 16 et s'étendant de part et d'autre du moyen de retenue 21, préférentiellement de l'évidement 22.

Ces parois 23 servent de support à la platine d'étanchéité 14 et présentent une hauteur suffisante pour maintenir la platine d'étanchéité 14 et la partie d'accrochage 15 à distance de la face intérieure 4 de la baguette d'une valeur rattrapant la flèche de concavité de la baguette 2 en vue de permettre l'accrochage sur la tôle de la carrosserie 6.

La platine d'étanchéité 14 est destinée à obturer l'ouverture 11 de carrosserie lorsque la baguette est en place, afin de limiter l'entrée d'eau et de saletés à l'intérieur de la carrosserie et d'atténuer la transmission du bruit de roulage.

Cette platine 14 est préférentiellement de forme sensiblement ovale, rectangulaire, ou intermédiaire entre ces deux formes, et peut présenter un rebord périphérique 24.

En position de prémontage du clip de fixation 10, représentée sur les figures 1 à 4, 6, 8 et 10 et correspondant à la position écartée de prémontage de la baguette 2, la platine d'étanchéité 14 se trouve à distance du support 5.

Elle est de préférence sensiblement parallèle à la baguette, ou présente préférentiellement une forme générale conique à concavité tournée vers le bas, c'est-à-dire à sommet dirigé vers le haut et donc vers la partie d'accrochage 15 du clip et à paroi s'évasant progressivement vers le bas notamment jusqu'à son rebord périphérique 24 par exemple sensiblement horizontal.

La platine d'étanchéité 14 comprend un deuxième moyen de retenue 25, qui s'étend de préférence sous cette platine 14 et qui est complémentaire à, et destiné à coopérer avec le moyen de retenue 21 de la base 13.

Dans la variante représentée, ce moyen de retenue 25 est un élément d'encliquetage 26 par exemple de type sapin, c'est-à-dire formé d'un plot 27 par exemple sensiblement parallélépipédique, descendant et comportant en partie inférieure une saillie 28, de forme sensiblement triangulaire à rampe inférieure progressive 29 et à face supérieure plane d'appui 30.

En position écartée de prémontage, le moyen de retenue 25 est situé au-dessus de l'évidement 22 de la base 13 et n'est pas en prise avec celui-ci.

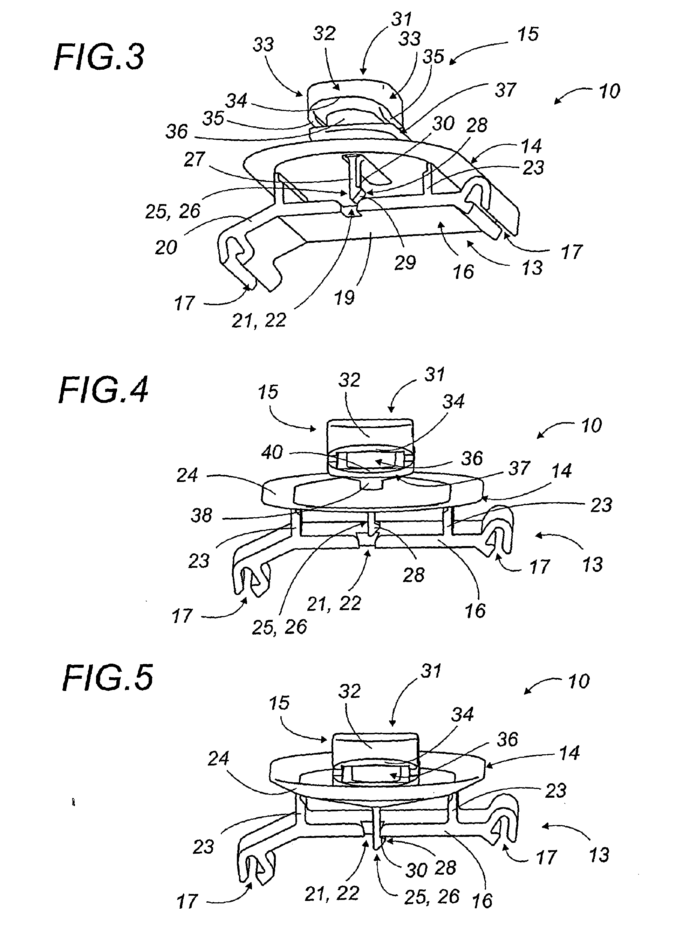

En position finale d'utilisation du clip de fixation 10, correspondant à la position plaquée de verrouillage de la baguette 2 et représentée sur les figures 5, 7, 9, et 11, le moyen de retenue 25 est en prise avec l'évidement 22 de la base 13. Dans le mode de réalisation préférentiel représenté, la saillie triangulaire 28 de l'élément d'encliquetage 26 de type sapin est engagée à travers l'évidement traversant 22, sa face supérieure plane d'appui 30 étant en butée de maintien contre la face inférieure du plan de base 16 au bord de l'évidement 22.

Dans cette position, la platine d'étanchéité 14 fléchit pour se retrouver en contact avec le support 5. Sa concavité peut avantageusement être inversée. Elle présente ainsi une forme générale conique à concavité tournée vers le haut. Son rebord périphérique 24 est de préférence remontant et dirigé vers l'ouverture 11 du support. La platine d'étanchéité 14 peut ainsi parfaitement remplir son rôle d'obturation de l'ouverture 11.

L'invention n'est cependant pas limitée à la variante préférentielle représentée. Les moyens complémentaires de retenue 21 et 25 peuvent adopter toute autre forme appropriée du moment qu'ils permettent de réaliser les deux positions de montage de la baguette 2 et le fléchissement de la platine d'étanchéité 14.

Au-dessus de la platine d'étanchéité 14, s'élève la partie d'accrochage 15.

La partie d'accrochage 15 comporte en partie supérieure une structure saillante d'accrochage appelée tête de clip 31, conçue pour s'engager dans l'ouverture 11 correspondante du support 5 et assurer ainsi le maintien de la baguette 2 sur la carrosserie 6.

Selon une variante préférentielle de l'invention, la tête de clip 31 présente un contour périmétrique à extrémité avant 32 arrondie prolongée par deux bords latéraux 33 s'évasant vers l'arrière, l'extrémité arrière de la tête de clip pouvant être ouverte ou fermée. Cette conformation garantit un effet avantageux de centrage lors de l'introduction des différentes têtes de clip 31 de la baguette dans la zone large des ouvertures 11 correspondantes de la carrosserie.

Préférentiellement, l'extrémité avant 32 de la tête de clip 31 peut présenter en sous-face un chanfrein d'entrée 34, facilitant le passage de la tête de clip 31 vers la zone étroite de l'ouverture 11 en assurant un guidage progressif de celle-ci.

En outre, les bords latéraux 33 de la tête de clip 31 peuvent avantageusement être prolongés chacun vers le bas par une nervure d'appui 35.

Bien évidemment, l'invention n'est pas limitée à la tête de clip 31 telle que représentée et précédemment décrite. La partie d'accrochage 15 du clip de fixation 10 selon l'invention peut comporter toute autre tête de clip appropriée susceptible de coopérer avec l'ouverture 11 en trou de serrure de la carrosserie et d'assurer ainsi le maintien de la baguette 2.

La tête de clip 31 est prolongée vers le bas par une âme centrale 36 plus étroite, susceptible de passer dans la zone étroite de l'ouverture 11 de carrosserie.

Cette âme centrale 36 prend naissance à partir d'une embase 37, elle-même portée par un socle 38 s'élevant de la face supérieure de la base 13 ou préférentiellement de la platine d'étanchéité 14.

L'embase 37 est de préférence sensiblement plane et par exemple de forme ovale.

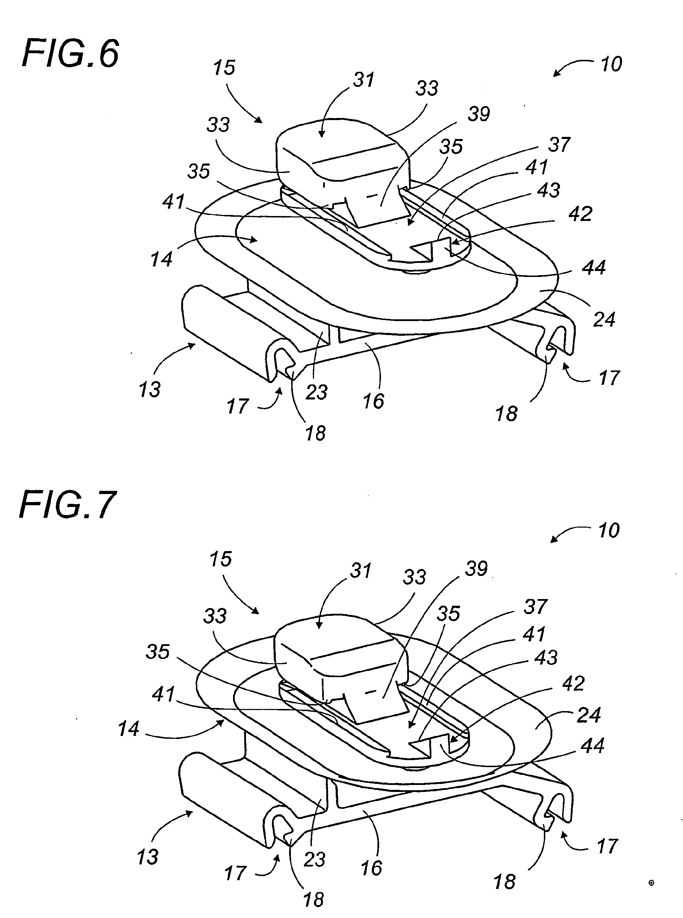

L'âme centrale 36 est préférentiellement disposée dans la partie avant de l'embase 37 et dans la zone médiane de celle-ci. Sur les figures 6 et 7, on peut remarquer un plan incliné 39 servant par exemple de face arrière à l'âme centrale 36 et reliant l'embase 37 à l'arrière de la tête de clip 31.

L'extrémité avant de l'embase 37 présente de préférence un chanfrein 40 disposé sous le chanfrein d'entrée 34 de la tête de clip 31 et de pente inversée par rapport à celui-ci. Ces deux chanfreins constituent une zone d'entrée progressive pour la tôle de carrosserie et coopèrent pour guider la tête de clip 31 jusqu'à son positionnement de blocage dans l'ouverture 11.

Deux nervures 41 peuvent également être prévues sur la face supérieure de l'embase 37, préférentiellement en bordure latérale de celle-ci. Ces deux nervures 41 participent au guidage lors de la mise en position de la tête de clip 31 et coopèrent avec les nervures d'appui 35 de la tête de clip 31 pour réaliser le coincement de la tôle de carrosserie 6.

Lorsque la tête de clip 31 est engagée dans la zone étroite de l'ouverture 11, la tôle de carrosserie 6 se retrouve coincée entre les nervures d'appui 35 de la tête de clip 31 et celles 41 de l'embase 37. Ces nervures, de surface d'appui réduite, constituent la seule zone de contact entre le clip de fixation 10 en position écartée de prémontage et la carrosserie 6. La surface de contact est minimale, ce qui permet une application optimale des produits de traitement, notamment de cataphorèse, et de peinture sur la quasi-totalité de la surface de la carrosserie.

En outre, l'embase 37 peut également comporter dans sa partie arrière une saillie anti-recul 42, par exemple sensiblement triangulaire à face avant inclinée 43 et à face arrière 44 sensiblement verticale, qui constitue une butée arrière pour le clip 10 une fois celui-ci mis en place dans l'ouverture 11 en forme de trou de serrure du support 5. En venant buter par sa face arrière 44 sensiblement verticale contre le bord arrière de l'ouverture 11, la saillie anti-recul 42, située à l'arrière de l'embase 37, s'oppose au recul du clip 10 vers la partie large de l'ouverture 11 en trou de serrure qui pourrait conduire au délogement du clip de fixation hors de l'ouverture 11 et par là à la chute de la baguette 2.

Grâce au clip de fixation 10 à deux positions de maintien selon l'invention, la baguette 2 peut être prémontée sur la carrosserie 6 d'un véhicule préalablement aux opérations de traitement, notamment par cataphorèse, et de mise en peinture. Lors de ces opérations, la baguette 2 avec ses clips de fixation 10 doit subir plusieurs montées en température de séchage et un passage au four à une température d'environ 200°C après le bain de cataphorèse.

La baguette 2 et ses clips de fixation 10 doivent donc être réalisés dans une matière plastique résistant à de telles températures. Ils peuvent par exemple être réalisés dans une matière plastique à base de polyamide.

Les clips de fixation 10 selon l'invention sont des pièces moulées par injection, indépendamment de la baguette 2, qui, une fois la baguette 2 montée sur la carrosserie 6, ne sont pas visibles par l'utilisateur car situées à l'arrière de la baguette 2. Ils peuvent donc en outre être renforcés par des fibres de verre, par exemple jusqu'à environ 30%.

La matière plastique utilisée pour la réalisation de la baguette 2 et de ses clips de fixation 10 doit également contenir un additif, du noir de carbone par exemple, lui conférant la conductivité suffisante et nécessaire à la réalisation des étapes de peinture électrostatique.

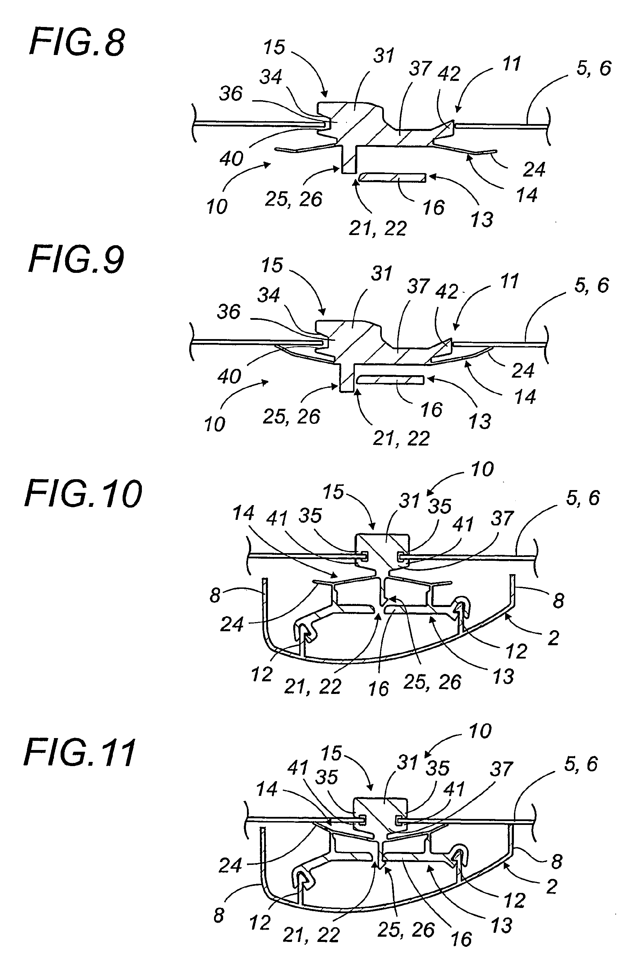

Le fonctionnement du clip de fixation 10 à deux positions de maintien représenté va maintenant être décrit en référence aux figures 8 à 11.

Les clips de fixation 10 doivent d'abord être montés sur la face intérieure 4 de la baguette 2. Pour cela, ils sont assemblés par clipsage sur les nervures longitudinales 12 de la baguette 2, au moyen des rainures 17 de leur plan de base 16 et de leurs conformations d'accrochage 18.

Cette première étape d'assemblage peut être réalisée de manière automatisée par une machine-outil. Elle peut avantageusement avoir lieu chez le fabricant de baguettes, la baguette étant ensuite livrée sur le lieu de son montage final, avec ses clips de fixation 10 déjà assemblés sur la face intérieure de la baguette. Cependant, cet assemblage peut évidemment être manuel et/ou être réalisé juste avant le montage de la baguette 2 sur son support 5.

Les clips de fixation 10 selon l'invention se trouvent à ce stade, comme représenté sur la figure 1, en position de prémontage correspondant à la position écartée de prémontage de la baguette.

Dans cette position, les moyens de retenue 21 de la base 13 et 25 de la platine d'étanchéité 14, à savoir dans le mode de réalisation préférentiel représenté l'évidement 22 et l'élément d'encliquetage 26, ne sont pas en prise. La platine d'étanchéité 14 est sensiblement parallèle à la baguette, ou présente de préférence une forme sensiblement conique à concavité tournée vers le bas.

La baguette 2 est ensuite montée sur son support 5. Grâce aux clips 10 selon l'invention, elle peut être prémontée en position écartée et à distance de son support 5. Pour cela, les têtes de clip 31 des différents clips de fixation 10 sont insérées à travers la zone large des ouvertures 11 en forme de trou de serrure correspondantes du support 5.

Le monteur déplace ensuite la baguette 2 par un mouvement de translation longitudinale vers l'avant. Les clips de fixation 10 sont ainsi translatés vers la zone étroite des ouvertures 11 jusqu'à une position de blocage.

Lors de ce mouvement de translation, l'âme centrale 36 de chaque clip de fixation 10 traversant l'une des ouvertures 11, passe de la zone large à la zone étroite de cette ouverture. Ce mouvement est guidé grâce aux chanfreins d'entrée 34 de la tête de clip 31 et 40 de l'embase 37.

Simultanément, les nervures d'appui 35 de la tête de clip 31 et celles 41 de l'embase 37 viennent en prise avec les bords de carrosserie 6 entourant la zone étroite de l'ouverture, loin des éventuelles bavures liées au poinçonnage des ouvertures 11.

Grâce à la conception particulièrement avantageuse du clip selon l'invention, le support 5 n'est en contact avec le clip de fixation 10 qu'au niveau de la surface d'appui extrêmement limitée de ces nervures 35 et 41.

La baguette 2 est en position fixe sur son support 5 mais écartée par rapport à celui-ci, les rebords longitudinaux 8 de la baguette se trouvant à distance de la carrosserie 6. De même, la platine d'étanchéité 14, dont la concavité est à ce stade tournée vers la baguette, se trouve à l'écart du support 5. Son rebord périphérique 24 est ainsi décalé de préférence de plus de 4 mm par rapport à la tôle de carrosserie 6.

La baguette 2 et ses clips de fixation 10 se trouvent alors dans la configuration illustrée sur les figures 8 et 10.

Les opérations de traitement et de mise en peinture de la baguette et de son support peuvent ainsi être réalisées de manière tout à fait satisfaisante sur sensiblement toute la surface à traiter.

Une fois les opérations de traitement et/ou de peinture terminées, le monteur n'a qu'à exercer sur la baguette 2, un effort de poussée transversal à celle-ci, pour que les clips de fixation 10 selon l'invention passent dans leur deuxième position de maintien.

Lors de ce mouvement transversal, la baguette 2 se rapproche du support 5 jusqu'à ce que ses rebords longitudinaux 8 arrivent en contact avec la carrosserie 6.

La platine d'étanchéité 14 fléchit progressivement sous la poussée des parois 23 jusqu'à ce que sa concavité s'inverse et que son rebord périphérique 24 vienne au contact du support 5. La platine d'étanchéité 14 obture alors parfaitement l'ouverture 11 et peut ainsi dans cette position remplir sa fonction d'étanchéité de manière satisfaisante.

Pendant ce mouvement, la saillie triangulaire 28 de l'élément d'encliquetage 26 s'étendant sous la platine d'étanchéité 14, vient s'engager dans l'évidement 22 du plan de base 16, par un glissement de sa rampe inférieure progressive 29 contre un bord de l'évidement 22, jusqu'à se retrouver en appui de blocage de sa face supérieure plane d'appui 30 contre la face inférieure du plan de base 16.

La mise en prise des moyens de retenue 21 et 25, plus particulièrement de l'élément d'encliquetage 26 avec l'évidement 22 dans la variante représentée, permet de verrouiller le clip de fixation 10 en position plaquée de verrouillage comme illustré sur les figures 9 et 11.

La baguette 2 se retrouve alors en position finale d'utilisation, c'est-à-dire plaquée contre son support 5.

L'homme du métier pourra sans difficulté imaginer de nombreuses autres variantes ou adaptations du clip de fixation 10 à deux positions de maintien selon l'invention, en fonction de l'application souhaitée et des contraintes techniques auxquelles le clip et la baguette porteuse doivent répondre.

Pour garantir une sécurité absolue du verrouillage de la baguette, il est possible de prévoir encore sur la face arrière de la baguette un dispositif de fixation longitudinale de sécurité (non représenté), également appelé dispositif de fixation positive. On peut imaginer pour cela tout type de dispositif connu, par exemple vissage, marteau, fût, croix ou tout autre moyen approprié.

De façon optionnelle, ce dispositif de fixation positive peut être suffisamment long pour également verrouiller longitudinalement la baguette lorsqu'elle se trouve en position écartée de prémontage. Il participe ainsi à la fixation de la baguette sur la carrosserie durant les opérations de mise en peinture.

De manière évidente, l'invention ne se limite pas au mode de réalisation préférentiel décrit et représenté sur les différentes figures, l'homme du métier pouvant y apporter de nombreuses modifications et imaginer d'autres variantes sans sortir ni de la portée, ni du cadre de l'invention.

## Revendications

1. Clip de fixation destiné à assurer la fixation sur un support (5) et plus particulièrement sur la carrosserie (6) d'un véhicule routier notamment du type automobile, d'un élément linéaire (2) décoratif et/ou fonctionnel, par exemple du type baguette, bande, moulure, enjoliveur de ceinture de caisse ou de bas de caisse, clip de fixation (12) moulé indépendamment de l'élément linéaire (2) et destiné à être rapporté et assemblé sur la face intérieure (4) de celui-ci, comprenant une base (13) rapportée sur la face intérieure (4) de l'élément linéaire (2), une partie d'accrochage (15) comportant une structure saillante d'accrochage appelée tête de clip (31) conçue pour coopérer avec une ouverture de montage (11) du type en « trou de serrure » ménagée en regard dans le support (5), et une platine d'étanchéité (14) destinée à obturer l'ouverture de montage (11) en position finale d'utilisation, clip de fixation (10) **caractérisé en ce que** la base (13) comporte un moyen de retenue (21) destiné à coopérer avec un moyen de retenue (25) complémentaire porté par la platine d'étanchéité (14), ces deux moyens de retenue (21, 25) permettant de réaliser deux positions de maintien du clip de fixation (10) : une position de prémontage et une position finale d'utilisation, se traduisant respectivement par deux positions de montage de l'élément linéaire (2) sur son support (5) : une position écartée de prémontage à distance du support (5) lorsque les deux moyens de retenue (21, 25) ne sont pas en prise et une position de verrouillage plaquée contre le support (5) lorsque les deux moyens de retenue (21, 25) sont en prise l'un avec l'autre, et **en ce que** la platine d'étanchéité (14) se trouve à distance du support (5) dans la position écartée de prémontage et fléchit pour se retrouver en contact avec celui-ci dans la position de verrouillage.

2. Clip de fixation selon la revendication précédente **caractérisé en ce que** la base (13) comporte un plan de base (16) sur lequel est situé le moyen de retenue (21) de la base (13).

3. Clip de fixation selon la revendication précédente **caractérisé en ce que** le plan de base (16) est terminé de chaque côté par une rainure (17) ouverte vers le bas, présentant une conformation d'accrochage (18) et destinée à coopérer avec une nervure (12) s'étendant sur la face intérieure (4) de l'élément linéaire (2) pour assurer la fixation du clip de fixation (10) sur l'élément linéaire (2).

4. Clip de fixation selon la revendication 2 ou 3 **caractérisé en ce que** la base (13) comporte en outre deux parois (23) sensiblement longitudinales, s'élevant du plan de base (16) de part et d'autre du moyen de retenue (21) et servant de support à la platine d'étanchéité (14).

5. Clip de fixation selon l'une quelconque des revendications précédentes **caractérisé en ce que** la platine d'étanchéité (14) est de forme sensiblement ovale ou rectangulaire et comporte un rebord périphérique (24).

6. Clip de fixation selon l'une quelconque des revendications précédentes **caractérisé en ce qu'**en position de prémontage du clip de fixation (10), la platine d'étanchéité (14) est sensiblement parallèle à l'élément linéaire (2) ou présente une forme générale conique à concavité tournée vers le bas et **en ce qu'**en position finale d'utilisation du clip de fixation (10) correspondant à la position plaquée de verrouillage de l'élément linéaire (2), la platine d'étanchéité (14) présente une forme générale conique à concavité tournée vers le haut.

7. Clip de fixation selon l'une quelconque des revendications précédentes **caractérisé en ce que** le moyen de retenue (21) de la base (13) est un évidement (22) et **en ce que** le moyen de retenue (25) de la platine d'étanchéité (14) est un élément d'encliquetage (26) qui s'étend sous la platine d'étanchéité (14).

8. Clip de fixation selon les revendications 2 et 7 **caractérisé en ce que** l'évidement (22) est une ouverture traversante formant une encoche dans le bord avant du plan de base (16).

9. Clip de fixation selon la revendication 7 ou 8 **caractérisé en ce que** le moyen de retenue (25) de la platine d'étanchéité (14) est un élément d'encliquetage (26) de type sapin, comprenant un plot (27) descendant, comportant en partie inférieure une saillie (28) de forme sensiblement triangulaire à rampe inférieure progressive (29) et à face supérieure plane d'appui (30).

10. Clip de fixation selon l'une quelconque des revendications précédentes **caractérisé en ce que** la partie d'accrochage (15) comporte une tête de clip (31), une âme centrale (36) plus étroite prolongeant la tête de clip (31) vers le bas, et une embase (37) sur laquelle l'âme centrale (36) prend naissance.

11. Clip de fixation selon la revendication 10 **caractérisé en ce que** la tête de clip (31) et l'extrémité avant de l'embase (37) présentent chacune un chanfrein (34, 40) disposé l'un en dessous de l'autre et de pente inversée.

12. Clip de fixation selon la revendication 10 ou 11 **caractérisé en ce que** les bords latéraux (33) de la tête de clip (31) sont prolongés chacun vers le bas par une nervure d'appui (35) et **en ce que** l'embase (37) comporte également deux nervures (41) en bordure latérale de sa face supérieure, ces deux nervures (41) coopérant avec les nervures d'appui (35) de la tête de clip (31) pour réaliser le coincement du support (5).

13. Clip de fixation selon l'une quelconque des revendications 10 à 12 **caractérisé en ce que** l'embase (37) comporte dans sa partie arrière une saillie anti-recul (42) servant de butée arrière pour le clip (10) une fois celui-ci mis en place dans l'ouverture (11).

14. Clip de fixation selon l'une quelconque des revendications précédentes **caractérisé en ce qu'**il est réalisé avec une matière plastique à base de polyamide ou renforcée par des fibres de verre ou contenant un additif lui conférant une conductivité suffisante pour la réalisation des étapes de peinture électrostatique.

15. Elément linéaire (2) décoratif ou fonctionnel, par exemple du type baguette, bande, moulure, enjoliveur de ceinture de caisse ou de bas de caisse, destiné à être rapporté contre et monté sur un support (5) et plus particulièrement la carrosserie (6) d'un véhicule routier notamment du type automobile, **caractérisé en ce qu'**il comporte sur sa face intérieure (4) au moins un clip de fixation à deux positions de maintien (10) selon l'une quelconque des revendications précédentes.

16. Elément linéaire (2) selon la revendication précédente **caractérisé en ce qu'**il comporte en outre sur sa face arrière (4) au moins un dispositif de fixation longitudinale de sécurité et **en ce que** ce dispositif de fixation longitudinale de sécurité est suffisamment long pour également verrouiller longitudinalement l'élément linéaire (2) en position écartée de prémontage à distance du support (5).

## Claims

1. Fastening clip intended to ensure the fastening on a support (5) and more particularly on the bodywork (6) of a road vehicle, in particular of an automobile type, of a decorative and/or functional linear element (2), for instance of rod, strip, trim, beltline or rocker panel type, fastening clip (12) molded independently from the linear element (2) and intended to be placed and assembled on the inner face (4) of the latter, including a base (13) placed on the inner face (4) of the linear element (2), a hooking part (15) including a so-called protruding clip head hooking structure (31) designed for cooperating with a «keyhole» type assembly opening (11) arranged oppositely in the support (5), and a sealing plate (14) intended to seal the assembly opening (11) in the final use position, a fastening clip (10) **characterized in that** the base (13) includes one retention mean (21) intended for cooperating with a complementary retention mean (25) which is carried by the sealing plate (14), both retention means (21, 25) allowing for two holding positions for the fastening clip (10), a pre-assembly position and a final use position, respectively defining two assembly positions of the linear element (2) on its support (5): an open position of the pre-assembly at a distance from the support (5) when both retention means (21, 25) are not engaged and a locking position adhering against the support (5) when both retention means (21, 25) are engaged with each other, and **in that** the sealing plate (14) is placed at a distance from the support (5) in the open position of the pre-assembly and folded to be placed in contact with the latter in the locking position.

2. Fastening clip according to the previous claim **characterized in that** the base (13) includes a base plane (16) on which the retention mean (21) of base (13) is placed.

3. Fastening clip according to the previous claim **characterized in that** the base plane (16) ends on each side with a downward opened groove (17), revealing a hook shape (18) intended to cooperate with a rib (12) extending on the inner face (4) of the linear element (2) so as to ensure the fastening of the fastening clip (10) on the linear element (2).

4. Fastening clip according to claim 2 or 3 **characterized in that** the base (13) also includes two walls (23) slightly longitudinal, rising up from the base plane (16) on both sides of the retention mean (21) and used as a support for the sealing plate (14).

5. Fastening clip according to any one of the preceding claims **characterized in that** the sealing plate (14) has a slightly oval or rectangular form and includes a peripheral edge (24).

6. Fastening clip according to any one of the preceding claims **characterized in that** in the pre-assembly position of the fastening clip (10), the sealing plate (14) is slightly parallel to the linear element (2) or presents a generally conical form with a downward directed concavity and **in that** in the final use position, the fastening clip (10) corresponding to the adhered locking position of the linear element (2), the sealing plate (14) presents a generally conical form with a upward directed concavity.

7. Fastening clip according to any one of the preceding claims **characterized in that** the retention mean (21) of the base (13) is a recess (22) and **in that** the retention mean (25) of the sealing plate (14) is a ratchet element (26) that extends under the sealing plate (14).

8. Fastening clip according to claims 2 and 7 **characterized in that** the recess (22) is a through opening forming a notch in the front edge of the base plane (16).

9. Fastening clip according to claims 7 or 8 **characterized in that** the retention mean (25) of the sealing plate (14) is a fir tree type ratchet element (26), comprising a descending stem (27), including a slightly triangular form protrusion (28) in a bottom part with a progressively lower ramp (29) and an upper plane support face 15 (30).

10. Fastening clip according to any one of the preceding claims **characterized in that** the hook part (15) includes a clip head (31), a narrowed central core (36) prolonging the clip head (31) downwards, and a base (37) on which the central core (36) is formed.

11. Fastening clip according to claim 10 **characterized in that** the clip head (31) and the front end of the assembly base (37) each have a bevel (34, 40) arranged beneath each other and an inverted slope.

12. Fastening clip according to claim 10 or 11 **characterized in that** the lateral edges (33) of the clip head (31) are each prolonged downwards by a support rib (35) and **in that** the base (37) also includes two ribs (41) on the lateral edge of its upper face, both ribs (41) cooperating with the support ribs (35) of the clip head (31) so as to obtain the jamming of the support (5).

13. Fastening clip according to any one of claims 10 to 12 **characterized in that** the base (37) includes in its rear part an anti-recoil protrusion (42) serving as a rear stop for the clip (10) once the latter has been placed in the opening (11).

14. Fastening clip according to any one of the preceding claims **characterized in that** it is made with a polyamide based plastic material or reinforced by glass fibers or which contains an additive that confers satisfactory conductivity for achieving the electrostatic painting steps.

15. Decorative or functional linear element (2), for instance of rod, strip, trim, beltline or rocker panel type, intended to be placed against and mounted on a support (5) and more particularly the bodywork (6) of a road vehicle in particular of an automobile type, **characterized in that** it includes on its inner face (4) at least one fastening clip having two support positions (10) according to any one of the preceding claims.

16. Linear element (2) according to the previous claim **characterized in that** it also includes on its rear face (4) at least one longitudinal security fastening device and **in that** this longitudinal security fastening device is long enough for also longitudinally locking the linear element (2) in an open position of pre-assembly at a distance from the support (5).

## Patentansprüche

1. Befestigungsklammer zur Absicherung der Befestigung auf einem Träger (5) speziell auf der Karosserie (6) eines Straßenfahrzeugs, insbesondere in der Art eines Personenkraftwagens, eines dekorativen und/oder funktionellen linearen Elements (2), zum Beispiel in Form eines Stabes, eines Bandes, einer Leiste, einer Zierblende für die Karosserie-Gürtellinie oder den Seitenschweller, wobei die Befestigungsklammer (12) unabhängig von dem linearen Element (2) geformt und dazu bestimmt ist, auf der Innenseite (4) desselben aufgebracht und angefügt zu werden, welche folgendes umfasst: ein Unterteil (13), das auf die Innenseite (4) des linearen Elements (2) aufgebracht ist, ein Ankopplungsteil (15) mit einer vorspringenden Ankopplungsstruktur, den sogenannten Klammerkopf (31), der so konzipiert ist, um mit einer Montageöffnung (11) in Form eines «Schlüsselloches» zusammenzuwirken, die in dem Träger (5) gegenüberliegt, und eine Dichtungsplatte (14), die dazu bestimmt ist, die Montageöffnung (11) in der Benutzungsendlage abzudichten, wobei die Befestigungsklammer (10) **dadurch gekennzeichnet ist, dass** das Unterteil (13) ein Arretiermittel (21) umfasst, das dazu bestimmt ist, mit einem komplementären Arretiermittel (25) zusammenzuwirken, das von der Dichtungsplatte (14) getragen wird, wobei diese beiden Arretiermittel (21, 25) es ermöglichen, zwei Haltepositionen der Befestigungsklammer (10), und zwar eine Vormontageposition und eine Benutzungsendposition zu erzielen die auch zwei Montagepositionen des linearen Elements (2) auf dessen Träger (5) entsprechen, eine Vormontageposition wenn die beiden Arretiermittel (21, 25) nicht im Eingriff sind und eine Verriegelungsposition gegen den Träger (5), wenn die beiden Arretiermittel (21, 25) im Eingriff sind, sowie **dadurch**, dass die Dichtungsplatte (14) von dem Träger (5) entfernt liegt in der entfernten Vormontageposition und dann sich verbiegt, um mit demselben in der Verriegelungsposition wieder in Kontakt zu kommen.

2. Befestigungsklammer nach dem vorangehenden Anspruch, **dadurch gekennzeichnet, dass** das Unterteil (13) eine Unterteilebene (16) aufweist, auf welcher sich das Arretiermittel (21) des Unterteils (13) befindet.

3. Befestigungsklammer nach dem vorangehenden Anspruch, **gekennzeichnet dadurch, dass** die Unterteilebene (16) an jeder Seite durch eine nach unten geöffnete Nut (17) abgeschlossen ist, die einen Ansatz (18) aufweist und dazu dient, um mit einer Rippe (12) zusammenzuwirken, die sich auf der Innenseite (4) des linearen Elements (2) erstreckt, um die Befestigung der Klammer (10) auf dem linearen Element (2) abzusichern.

4. Befestigungsklammer nach dem Anspruch 2 oder 3, **gekennzeichnet dadurch, dass** das Unterteil (13) außerdem zwei in etwa Längswände (23) umfasst, die sich von der Grundebene (16) auf beiden Seiten des Arretiermittels (21) erhebt und als Träger an der Dichtungsplatte (14) dient.

5. Befestigungsklammer nach einem der vorangehenden Ansprüche, **gekennzeichnet dadurch, dass** die Dichtungsplatte (14) in etwa oval oder rechteckig ist und einen peripheren Rand (24) umfasst.

6. Befestigungsklammer nach einem der vorgehenden Ansprüche, **gekennzeichnet dadurch, dass** die Dichtungsplatte (14) in der Vormontageposition der Befestigungklammer (10) im wesentlichen parallel zum linearen Element (2) liegt oder eine allgemeine konische Form aufweist mit einer nach unten gewendeten Wölbung und dass die Dichtungsplatte (14) eine im allgemeinen konische Form mit einer nach oben gewendeten Wölbung aufweist in der Benutzungsendposition der Befestigungklammer (10), die der gedrückten Verriegelungsposition des linearen Elements (2) entspricht.

7. Befestigungsklammer nach einem der vorangehenden Ansprüche, **gekennzeichnet dadurch, dass** das Arretiermittel (21) des Unterteils (13) eine Aussparung (22) ist, und **dadurch**, dass das Arretiermittel (25) der Dichtungsplatte (14) ein Rastelement (26) ist, das sich unter der Dichtungsplatte (14) erstreckt.

8. Befestigungsklammer nach den Ansprüchen 2 und 7, **gekennzeichnet dadurch, dass** die Aussparung (22) eine Durchgangsöffnung ist, die im vorderen Rand der Unterteilsebene (16) einen Einschnitt bildet.

9. Befestigungsklammer nach dem Anspruch 7 oder 8, **gekennzeichnet dadurch, dass** das Arretiermittel (25) der Dichtungsplatte (14) ein tannenartiges Rastelement (26) ist, das einen absteigenden Stab (27) aufweist, der im unteren Teil einen Vorsprung (28) aufweist mit einer in etwa dreieckigen Form mit einer unteren zunehmenden Steigung (29) und mit einer ebenen Oberseite als Abstützung (30).

10. Befestigungsklammer nach einem der vorangehenden Ansprüche, **gekennzeichnet dadurch, dass** das Ankopplungsteil (15) einen Klammerkopf (31) umfasst, einen engeren zentralen Steg (36), der den Klammerkopf (31) nach unten hin verlängert, und eine Halterung (37), auf welcher der zentrale Steg (36) hervorragt.

11. Befestigungsklammer nach Anspruch 10, **gekennzeichnet dadurch, dass** der Klammerkopf (31) und das vordere Ende der Halterung (37) jeweils eine Abschrägung (34, 40) aufweist, die eine unter der anderen und in umgekehrtem Hang angeordnet sind.

12. Befestigungsklammer nach Anspruch 10 oder 11, **gekennzeichnet dadurch, dass** die seitlichen Ränder (33) des Klammerkopfes (31) jeweils durch eine Abstützrippe (35) nach unten hin verlängert sind, sowie **dadurch**, dass die Halterung (37) außerdem zwei Abstützrippen (41) in der seitlichen Umrandung von deren Oberseite umfasst, wobei diese beiden Rippen (41) mit den Abstützrippen (35) des Klammerkopfes (31) zusammenwirken, um die Verklemmung des Trägers (5) zu vollstrecken.

13. Befestigungsklammer nach einem der Ansprüche 10 bis 12, **gekennzeichnet dadurch, dass** die Halterung (37) in deren hinteren Teil eine Rückschiebesperre (42) umfasst, der als hinterer Anschlag für die Klammer (10) dient, wenn diese einmal in der Öffnung (11) positioniert ist.

14. Befestigungsklammer nach einem der vorangehenden Ansprüche, **gekennzeichnet dadurch, dass** diese aus einem Kunststoff auf Polyamidbasis hergestellt oder mit Glasfasern verstärkt ist oder einen Zusatzstoff enthält, der ihr eine ausreichende Leitfähigkeit zur Durchführung der elektrostatischen Lackierphasen verleiht.

15. Dekoratives oder funktionelles lineares Element (2), zum Beispiel in der Art eines Stabes, eines Bandes, einer Leiste, einer Zierblende für die Karosserie-Gürtellinie oder den Seitenschweller, das dazu bestimmt ist, um gegen einen Träger (5) gedrückt und auf diesen montiert zu werden, und genauer auf die Karosserie (6) eines Straßenfahrzeugs, insbesondere in der Art von einem Personenkraftwagen, **gekennzeichnet dadurch, dass** es auf dessen Innenseite (4) mindestens eine Befestigungsklammer mit zwei Haltepositionen (10) nach einen der vorangehenden Ansprüche aufweist.

16. Lineares Element (2) nach dem vorangehenden Anspruch, **gekennzeichnet dadurch, dass** es außerdem auf dessen Rückseite (4) mindestens eine Sicherheits-Längsbefestigungs-Vorrichtung umfasst, sowie **dadurch**, dass diese Sicherheits-Längsbefestigungs-Vorrichtung ausreichend lang ist, um ebenfalls in der Längsrichtung das lineare Element (2) in einer entfernten Vormontage-Position, auf einem Abstand vom Träger, zu verriegeln (5).
